Europäisches Patentamt

European Patent Office

Office européen des brevets

(19)

(11) Numéro de publication: **0 074 052**
**B1**

(12) FASCICULE DE BREVET EUROPEEN

(45) Date de publication du fascicule du brevet: **03.09.86**

(51) Int. Cl.⁴: **A 21 C 11/00,** A 21 C 11/10

(21) Numéro de dépôt: **82107955.5**

(22) Date de dépôt: **30.08.82**

(54) Appareil à sertir les gâteaux fourrés ou croustades.

(30) Priorité: **08.09.81 FR 8117012**

(43) Date de publication de la demande:
**16.03.83 Bulletin 83/11**

(45) Mention de la délivrance du brevet:
**03.09.86 Bulletin 86/36**

(84) Etats contractants désignés:
**BE CH DE GB LI SE**

(56) Documents cités:
**DE-A-1 432 972**
**FR-A-2 181 319**
**GB-A- 923 741**
**GB-A- 945 694**
**US-A-1 959 011**
**US-A-2 393 682**

(73) Titulaire: **FRISCO-FINDUS AG**
**CH-9400 Rorschach (CH)**

(72) Inventeur: **Launay, Noel**
**Rue Bossuet 15**
**F-60 000 Beauvais (FR)**

Courier Press, Leamington Spa, England.

EP 0 074 052 B1

## Description

La présente invention concerne un appareil à sertir les gâteaux fourrés ou croustades.

Lors de la confection de tels gâteaux, en particulier des "pithiviers", il y a lieu d'étaler sur une surface plane une première couche de pâte dite "abaisse inférieure", à disposer sur celle-ci la "farce" ou le mélange dont le gâteau fini sera "fourré", à appliquer sur cet ensemble une seconde couche de pâte dite "abaisse supérieure", à exercer une pression pour faire adhérer les deux abaisses tout autour de la farce puis à réaliser par pincements et découpes inclinées les bords latéraux de ces deux abaisses.

A l'échelon artisanal ou semi-industriel, cette confection se fait généralement manuellement en se servant d'un outillage de forme appropriée s'appliquant sur l'ensemble des deux abaisses enveloppant le mélange ou la farce centrale, en exerçant la pression voulue pour réaliser la liaison de ces deux abaisses et en se servant également d'un couteau pour réaliser les découpes latérales et périphériques sur lesdites abaisses ainsi réunies.

Or la présente invention vise un appareil permettant d'effectuer toutes ces opérations de façon simple, économique et automatique, de manière à disposer d'un moyen industriel pour confectionner des gâteaux "fourrés", sucrés ou salés en particulier des pithiviers ou croustades.

Un appareil de ce type est déja connu de US—A—1959011, cet appareil comportant un plateau destiné à supporter le produit à confectionner, une matrice de forme appropriée disposée au-dessus de ce plateau et rendue solidaire d'un arbre susceptible d'être animé d'un mouvement ascendant-descendant par un moyen permettant d'exercer une pression sur ledit produit et un moyen associé à ladite matrice consistant en des bras latéraux portant à une extrémité des moyens pour le pincement et la découpe de la périphérie du produit à obtenir, lesquels bras sont actionnés de manière à appliquer lesdits moyens de pincement et de découpe sur ledit produit au moment où ladite matrice est dans sa position basse.

L'appareil selon l'invention comporte également toutes ces caracteristiques et se caractérise par celles décrites dans la partie caractérisante de la revendication 1.

Suivant d'autres caractéristiques secondaires:

—Le mouvement ascendant-descendant de ladite matrice ainsi que celui desdits plateaux porteurs sont assurés au moyen d'un vérin.

—La pression exercée sur le produit à obtenir et le retour des éléments mobiles de l'appareil sont assurés par des ressorts tarés.

D'autres caractéristiques et avantages de l'invention ressortiront plus clairement de la description qui va suivre faite en regard des dessins annexés d'une forme d'exécution de l'appareil montrée à titre d'exemple. Sur les dessins:

—la figure 1 est une vue en élévation et en coupe d'un appareil selon l'invention et,

—la figure 2 est une vue en élévation représentant schématiquement un des moyens de pincement et de découpe de l'appareil selon l'invention.

En se référant à ces dessins, cet appareil est essentiellement constitué par un châssis dont on a représenté un des éléments 1, affectant de préférence la forme de colonne, châssis sur lequel sont montés les différents organes constitutifs et moteurs. Ainsi, un vérin 2 porté par ledit châssis est destiné à agir sur un ensemble 3 lui-même constitué de la façon suivante: une potence 4 porte à ses extrémités une pièce tubulaire 5 à l'intérieur de laquelle est monté un arbre 6. A cette pièce tubulaire 5, sont associés deux consoles ou plateaux 7 et 8 qui seront décrits plus en détail ultérieurement et qui sont séparés l'un de l'autre d'une distance réglable.

Entre ces deux consoles, il est prévu un ressort 9 dont le rôle ressortira de la description qui va suivre.

Par ailleurs, l'extrémité de l'arbre 6 est munie d'une matrice 10.

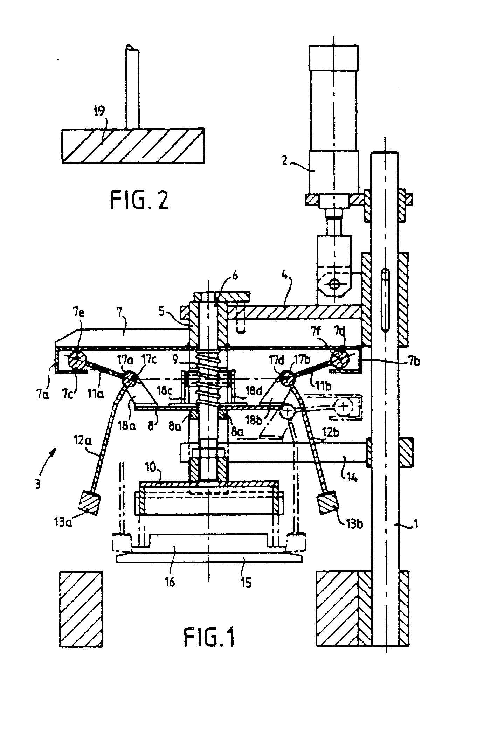

Le plateau 7, rendu solidaire de la pièce tubulaire 5, comporte, au voisinage de sa périphérie et au-dessous de celle-ci, des cornières telles que 7a—7b dans chacune desquelles est logée une masselotte circulaire, cylindrique ou sphérique (respectivement 7c—7d) montée oscillante autour de son axe (respectivement 7e—7f). Chaque masselotte porte un bras 11a—11b lui-même relié à une pièce correspondante 17a—17b montée oscillante autour d'un axe 17c—17d porté par une chape 18a—18b montée sur le plateau 8. A son tour, chacune des pièces 17a—17b porte un bras (respectivement 12a—12b), disposé de préférence sensiblement orthogonalement par rapport au bras correspondant (respectivement 11a—11b) à l'extrémité duquel est monté un support porte-couteaux (respectivement 13a—13b). Une seconde paire de bras dont le montage est analogue à celui qui vient d'être décrit est prévue orthogonalement à la première paire. Cette seconde paire est du reste représentée sur la figure 1 annexée par les chapes 18c—18d homologues des chapes 18a—18b.

Le mouvement de ces bras porte-couteaux ressortira de la description qui va suivre.

Le plateau 8 est appliqué par le ressort 9 sur une bague 8a susceptible de coulisser le long de l'arbre 6.

Le châssis 1 comporte aussi une piece 14 dont la position peut être réglable en hauteur, pièce qui sera dénommée "butée" par la suite.

Enfin, l'appareil comporte un plateau 15 porte-produit schématisé en 16.

Cet appareil fonctionne de la façon suivante:

Lorsque la tige du vérin 2 agit, par tout moyen approprié, sur la potence 4, celle-ci est sollicitée vers le bas et entraîne avec elle l'élément tubulaire 5, lequel entraîne à son tour les deux consoles 7 et 8 et la matrice 10.

Si l'on a préalablement pris la précaution de disposer sur le plateau 15 une abaisse inférieure portant une farce et une abaisse supérieure recouvrant ladite farce, le mouvement descendant de ladite matrice 10 a pour effet d'appliquer une portion annulaire de l'abaisse supérieure sur l'abaisse inférieure et de conférer à l'ensemble, sur la partie centrale du produit, la forme correspondant à la forme intérieure de ladite matrice. Dans le cas particulier illustré sur le dessin, cette forme est une forme parallélépipedédique expliquant ainsi la forme finale qu'aura le produit de pâtisserie obtenue.

La course du vérin étant limitée à une certaine valeur supérieure à la distance qui sépare la console ou plateau 8 de la butée 14, l'élément tubulaire poursuivant sa course, ladite console porte sur cette butée et coulisse le long de l'arbre central 6 en comprimant le ressort 9.

Lors de ce déplacement relatif de la console 8, la matrice 10 qui poursuit son mouvement de descente exerce toujours une pression sur l'abaisse supérieure, l'appuyant sur l'abaisse inférieure tout en enveloppant la partie centrale de l'ensemble.

Simultanément la remontée de la console 8 vers la console 7 a eu pour résultat d'entraîner l'ensemble articulé 11 et 12, ce qui du fait du déplacement relatif des axes d'articulation 17 se traduit par un débattement latéral des bras 12 et par conséquent des porte-couteaux 13 qui viennent enserrer la périphérie des deux abaisses réunies. La présence des couteaux 19 contribue au pincement et à la découpe de cette périphérie, l'inclinaison de ces couteaux pouvant être quelconque mais étant de préférence de l'ordre de 45°.

Au moment de la remontée de la matrice sous l'action de la tige du vérin 2, les mouvements inverses facilités par les forces de rappel du ressort 9 se produisent et un cycle peut être repris pour un nouveau produit.

La forme d'exécution de l'appareil décrite cidessus comporte un dispositif de commande unique des différents couteaux sertisseurs. En variante, les mouvements des couteaux sertisseurs peuvent être également commandés indépendemment par des vérins pneumatiques ou tout autre dispositif de commande.

Il va de soi qui la présente invention n'a été décrite qu'à titre purement explicatif et nullement limitatif.

**Revendications**

1. Appareil à sertir les gâteaux fourrés ou croustades, notamment des pithiviers, comportant un plateau fixe (15) destiné à supporter le produit à confectionner (16), une matrice (10) de forme appropriée disposée au-dessus de ce plateau et rendue solidaire d'un arbre (6) susceptible d'être animé d'un mouvement ascendant-descendant par un moyen (2, 4) permettant d'exercer une pression sur ledit produit et un moyen associé à ladite matrice consistant en des bras latéraux (11a, b, 12a, b) portant à une extrémité des moyens (13a, 13b, 19) pour le pincement et la découpe de la périphérie du produit à obtenir, lesquels bras sont actionnés de manière à appliquer lesdits moyens de pincement et de découpe sur ledit produit au moment où ladite matrice est dans sa position basse, caractérisé en ce que lesdits bras (11a, b, 12a, b) munis desdits moyens (13a, 13b, 19) de pincement et de découpe sont des leviers articulés autour d'axes (17c, d) situes entre deux plateaux porteurs (7, 8) superposés rendus solidaires des mouvements ascendant-descendant de ladite matrice, en ce que l'un desdits plateaux (8) est porteur des axes d'articulation des leviers et est susceptible de coulisser le long de l'arbre (6) porte-matrice, et en ce que l'autre plateau (7) agit sur les extrèmités des bras (11a, b, 12a, b); opposées aux moyens de pincement et de decoupe leur communiquant un mouvement de basculement latéral lors du déplacement relatif des axes d'articulation (17c, d) par rapport audit plateau de sorte que lesdits moyens (13a, 13b, 19) viennent enserrer et découper la périphérie du produit.

2. Appareil selon la revendication 1, caractérisé en ce que le plateau supérieur (7) est monté fixe sur l'arbre (6) portant la matrice (10), en ce que le plateau infeieur (8) coulisse le long de l'arbre (6), en ce que le plateau superieur (7) comporte, au voisinage de sa périphérie et au-dessous de celle-ci, des cornières (7a, b) dans chacune desquells est logée une masselotte (7c, d) montée oscillante autour de son axe (7e, f), ladite masselotte etant portée par un bras (11a, b) relié à une pièce (17a, b) montée oscillante autour d'un axe (17c, d) porté par une chape (18a, b) montée sur le plateau inferieur (8), et en ce que chacune des pièces oscillante (17a, b) porte un bras (12a, b) orienté sensiblement orthogonalement par rapport au bras porteur de masselotte (11a, b) et à l'extrémité duquel est monté un support (13a, b) portant les couteaux (19), lesdits supports et couteaux constituant respectivement lesdits moyens de pincement et de découpe du produit.

3. Appareil selon la revendication 1 ou la revendication 2 caractérisé par le fait que le mouvement ascendant-descendant de ladite matrice (10) ainsi que celui desdits plateaux porteurs (7, 8) sont assurés au moyen d'un vérin (2).

4. Appareil selon l'une des revendications 1 à 3, caractérisé par le fait que la pression exercé sur le produit à obtenir et le retour des éléments mobiles sont assurés par un ressort taré (9).

**Patentansprüche**

1. Gerät zum Einfassen von mit Füllungen versehenen Kuchen oder Pasteten, insbesondere von sog. Pithiviers, mit einer festen Plattform (15) zum Halten des zu konfektionierenden Produkts (16) mit einer Matrizee geeigneter Form, die über dieser Plattform angeordnet und mit einer Welle (6) fest verbunden ist, welche durch eine Einrichtung (2, 4), die auf das genannte Produkt Druck auszuüben vermag, mit einer Aufwärts-Abwärts-Bewegung beaufschlagbar ist, sowie einer der genannten Matrize zugeordneten Einrichtung, die aus zwei Seitenarmen (11a, b; 12a, b) besteht, die an einem ihrer Enden Mittel (13a, 13b, 19) zum Erfassen und Beschneiden des Randes des zu erzeugenden Produkts tragen, wobei die genannten Arme derart antreibbar sind, daß die genannten mittel zum Erfassen und Beschneiden in dem Augenblick an dem Produkt angreifen, in welchen die genannte Matrize sich in ihrer abgesenkten Position befindet, dadurch gekennzeichnet, daß die mit den genannten Mitteln (13a, 13b, 19) zum Erfassen und Beschneiden ausgestatteten Arme (11a, b; 12a, b) von Hebeln gebildet sind, die um Achsen (17c, d) verschwenkbar sind, welche zwischen zwei übereinander liegenden und mit den Aufwärts-Abwärts-Bewegungen der genannten Matrize gekoppelten Trägerplatten (7, 8) liegen, daß eine der genannten Trägrplatten (8) die Schwenkachsen der Hebel trägt und längs der die Matrize tragendeb Welle (6) gleitbar angeordnet ist, und daß die andere Trägerplatte (7) auf die den Mitteln zum Erfassen und Beschneiden entgegengestzten Enden der Arme (11a, b; 12a, b) einwirkt und zu einer seitlichen Kippbewegung veranlaßt, wenn die Schwenkachsen (17c, d) relativ zu der genannten Plattform verschoben werden, derart daß die genannten Mittel (13a, 13b, 19) den Rand des Produkts umfassen und beschneiden.

2. Gerät nach Anspruch 1, dadurch gekennzeichnet, daß die obere Trägerplatte (7) auf der die Matrize (10) tragenden Welle (6) fest montiert ist, daß die untere Trägerplatte (8) längs der Welle (6) gleitbar angeordnet ist, daß die obere Trägerplatte (7) im Bereich ihres Randes nach unten gerichtete Abwinkelungen (7a, b) besitzt, in denen jeweils ein um seine Achse (7e, f) pendelnd angeordneter Gleitkopf (7c, d) aufgenommen ist, der von einem Arm (11a, b) getragen ist, welcher mit einem Teil (17a, b) verbunden ist, das um eine von einem Gabelbügel (18a, b) getragene Achse (17c, d) pendelnd montiert ist, wobei dieser Gabelbügel (18a, b) auf der unteren Trägerplatte (8) montiert ist, und daß jedes dieser pendelnden Teile (17a, b) einen Arm (12a, b) trägt, der annähernd rechtwinklig zu dem den Gleitkopf (11a, b) tragenden Arm orientiert ist, und an dessen Ende eine die Messer (19) tragende Halterung (13, b) montiert ist, wobei die genannten Halterungen und Messer die Mittel zum Erfassen und Beschneiden des Produkts darstellen.

3. Gerät nach Anspruch 1, dadurch gekennzeichnet, daß die Antriebsvorrichtung für die Aufwärts-Abwärts-Bewegung der genannten Matrize (10) und die genannten Trägerplatten (7, 8) von einer Zylinder-Kolbenanordnung (2) gebildet ist.

4. Gerät nach einem der Ansprüche 1 bis 3, dadurch gekennzeichnet, daß der auf das erzeugte Produkt ausgeübte Druck und die Rückkehrbewegung der beweglichen Elemente durch eine tarierte Feder (9) bestimmt sind.

**Claims**

1. An apparatus for sealing tarts or pies, particularly almond tarts so called Pithiviers, comprising a fixed plate (15) intended to hold the product (16) to be subjected to the confection process, a mould (10) of suitable shape situated above said plate and fixed to a shaft (6) capable of making an ascending-descending movement by a means (2, 4) for applying pressure to said product and a means associated with said mould consisting of lateral arms (11a, b, 12a, b) supporting at one of their ends means (13a, b, 19) for nipping and cutting into the periphery of the product to be obtained, said arms being activated in such a way that said nipping and cutting means are applied to said product when the mould is in its lower position, characterised in that said arms (11a, b, 12a, b) with said nipping and cutting means (13a, b, 19) are levers pivotably mounted about axes (17c, d) located between two superimposed supporting plates (7, 8) which themselves follow the ascending-descending movements of said mould, in that the one of said plates (8) bears the axes of the pivoting levers and is designed to slide along the shaft (6) to which the mould is fixed and in that the other plate (7) acts on the ends of said arms (11a, b, 12a, b) which are opposed to the nipping and cutting means by deflecting them laterally during the movement of said axes (17c, d) relatively to said plate so that said means (13a, b, 19) surround and cut the periphery of the product.

2. An apparatus as claimed in claim 1, characterised in that the upper plate (7) is fixed on the shaft (6) which bears the mould (10), in that the lower plate (8) slides along the shaft (6), in that the upper plate (7) comprises near and under its periphery, angle members (7a, b) in each of which a circular, cylindrical or spherical block (7c, d) is mounted swinging about its axis (7e, f), said block being borne by an arm (11a, b) which is bound to an element (17a, b) mounted swinging about one axis (17c, d) borne by a yoke (18a, b) mounted on the lower plate (8) and in that each swinging element (17a, b) bears an arm (12a, b) which is arranged substantially orthogonally in relation to the block-bearing arm (11a, b) and at which end a holder (13a, b) is mounted which holds blades (19), said holders and blades respectively constituting said nipping and cutting means of the product.

3. An apparatus as claimed in claim 1 or claim 2, characterised in that the ascending-descending movement of said mould (10) and that of said supporting plates (7, 8) are generated by means of a jack (2).

4. An apparatus as claimed in any of claims 1 to 3, characterised in that the pressure applied to the product to be obtained and the return movement of the moving parts are generated by a loaded spring (9).

FIG.2

FIG.1